## Europäisches Patentamt
## European Patent Office
## Office européen des brevets

(11) Numéro de publication: **0 042 644**
**B1**

(12) **FASCICULE DE BREVET EUROPEEN**

(45) Date de publication du fascicule du brevet: **02.05.85**

(21) Numéro de dépôt: **81200644.3**

(22) Date de dépôt: **11.06.81**

(51) Int. Cl.⁴: **A 01 M 17/00,** A 01 M 29/00

(54) **Dispositif de dératisation par vibrations pour terrains ou constructions.**

(30) Priorité: **20.06.80 IT 8557680**

(43) Date de publication de la demande:
**30.12.81 Bulletin 81/52**

(45) Mention de la délivrance du brevet:
**02.05.85 Bulletin 85/18**

(84) Etats contractants désignés:
**AT BE CH DE FR GB IT LI LU NL SE**

(56) Documents cités:
**DE-A-1 482 369**
**DE-A-2 352 987**
**DE-C- 819 174**
**DE-C- 931 864**
**US-A-4 097 838**

(73) Titulaire: **MULTITECNO S.r.l.**
**Via Buonarroti, 137**
**I-35100 Padova (IT)**

(72) Inventeur: **Reatti, Guido**
**Via Curzola, 16**
**I-35100 Padova (IT)**

(74) Mandataire: **Bettello, Luigi, Dott. Ing.**
**Via Col d'Echele, 25**
**I-36100 Vicenza (IT)**

Courier Press, Leamington Spa, England.

### Description

La présente invention a pour but de permettre la réalisation d'un dispositif comprenant une série de terminaux enfoncés dans le sol ou fixés aux constructions à dératiser et qui, en engendrant sur ces terminaux des vibrations à fréquence réduite suivant un programme pré-établi, crée un état d'inquiétude chez les rongeurs afin d'obliger ceux-ci à abandonner leurs repaires à l'intérieur de la zone soumise auxdites vibrations, ou même de provoquer leur mort par inanimation par suite de l'état confusionnel ainsi déterminé.

On a déjà proposé des dispositifs de dératisation pour terrains ou constructions qui ont recours à des ultrasons c'est-à-dire à des vibrations à haute fréquence engendrées localement sur des appareils élémentaires.

Sont connus par exemple des brevets DE—C—819174 et DE—C—931864 des appareillages qui utilisent des vibrations à haute fréquence pour combattre les animaux nuisibles, mais avec des résultats bien réduites.

Le brevet américan US—A—4.097.838 prévoit des bas fréquences, avec la superposition de hautes fréquences, mais avec un dispositif qui ne donne aucune possibilité de régulation de l'entrefer, ni aucune sécurité de durée dans le temps.

Toutefois les dispositifs connus à ce jour ne comportent pas que des avantages. L'on sait par exemple que les ultrasons sont susceptibles de donner lieu à des malaises chez les humains ou chez les animaux; de plus ils présentent l'inconvénient de ne pouvoir franchir des barrières telles que les murs ou la structure des constructions, en même temps que leur rayon d'action en terrain découvert est restreint.

En ce qui concerne les dispositifs à vibrations l'on doit observer qu'ils sont équipés de terminaux à électro-aimants mobiles sur ressorts qui ne garantissent pas une longue durée d'utilisation. Ces terminaux ne peuvent être alimentés en courants d'intensité suffisamment élevée et leur tarage par réglage précis de leur entrefer est impossible. Ils se dérèglent très facilement et sont ainsi mis rapidement hors d'usage.

La présente invention vise à réaliser une installation comprenant une série de terminaux dont chacun est muni d'une fiche destineé à être enfoncée dans le sol ou d'un étrier rendu solidaire de la structure de construction à dératiser; chaque fiche ou étrier est uniquement solidaire d'une pièce élastique plane munie d'une masse magnétique et mise en vibration par un électro-aimant disposé dans le terminal, par fonctionnement électro-magnétique; ces terminaux sont reliés par des câbles électriques à une petite centrale unique renfermant le circuit électronique destiné à engendrer les impulsions électriques propres à déterminer une série de vibrations de basses fréquences d'intensité variable et à des intervalles de temps convenablement programmés, afin d'obtenir dans les meilleurs conditions l'effet de dératisation recherché.

Le circuit électronique monté dans la centrale ne sera pas décrit en détail du fait qu'il est susceptible d'être réalisé de différentes façons et qu'en tout état de cause ses caractéristiques n'entrent pas dans le champ de la protection par brevet, du moment qu'il est agencé pour engendrer uniquement des basses fréquences.

Par contre on décrira deux variantes pour la réalisation des terminaux élémentaires, étant noté que ces variantes sont données à simple titre d'exemples et qu'elles ne limitent nullement le domaine de l'invention.

Le dessin annexé, donné à titre d'exemple, permettra de mieux comprendre l'invention, les caractéristiques qu'elle présente et les avantages qu'elle est susceptible de procurer:

Fig. 1 montre le schéma général d'une installation conforme à l'invention.

Fig. 2 est une vue en élévation de l'un des terminaux, pourvu d'une fiche d'enfoncement dans le sol.

Fig. 3 est une coupe illustrant à plus grande échelle l'agencement de la tête d'un terminal réalisé conformément à la première forme d'exécution.

Fig. 4 représente la tête suivant la seconde forme d'exécution.

Fig. 5 est une vue en plan par dessus de la tête suivant fig. 4.

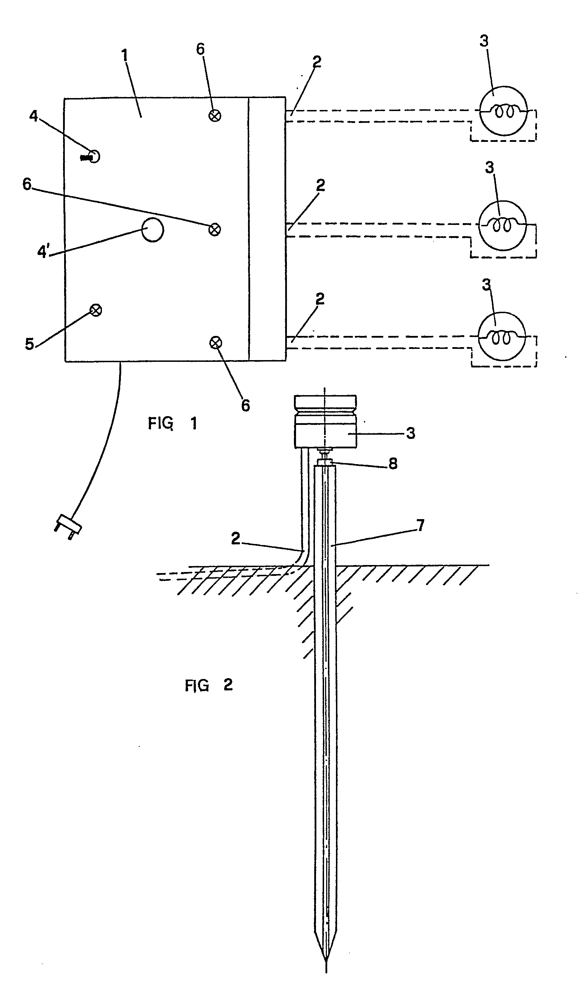

Comme montré par le schéma de fig. 1 l'installation considérée comprend une petite centrale électronique 1 munie de trois paires de conducteurs de sortie 2 qui la relient à un nombre égal de terminaux 3. Il va cependant de soi que cette centrale 1 peut être dotée d'un nombre quelconque de sorties 2 et de terminaux 3, en fonction des caractéristiques de l'installation à réaliser.

La centrale 1 comprend un interrupteur général 4 muni d'une lampe témoin d'allumage 5, et des voyants lumineux élémentaires 6 correspondant à chaque sortie 2 de façon à permettre le contrôle direct du fonctionnement correct des vibrations imparties au niveau de chaque terminal.

L'on indiquera de manière générale que la centrale 1 est agencée pour engendrer des impulsions électriques de fréquence 33,3 Hz synchronisées avec le réseau d'alimentation, et ce suivant un spectre d'intensité variable. Les signaux sont engendrés par intermittance selon un rapport marche/arrêt lui-même prévu variable.

Moyennant des dispositions particulières l'on peut obtenir un décrochage de la fréquence du réseau à courant alternatif pour quelques secondes en plus de la possibilité d'alterner des périodes de fonctionnement, de quelques minutes avec des périodes d'arrêt de quelques minutes également. Tout ceci peut être réalisé aussi bien à l'aide d'une programmation préétablie du circuit qu'au moyen d'un commutateur manuel 4' qui permet le choix du programme.

Il va de soi que le disposition particulière du programme de fonctionnement est déterminée lors de la construction et ne requiert aucun réglage de la part de l'opérateur.

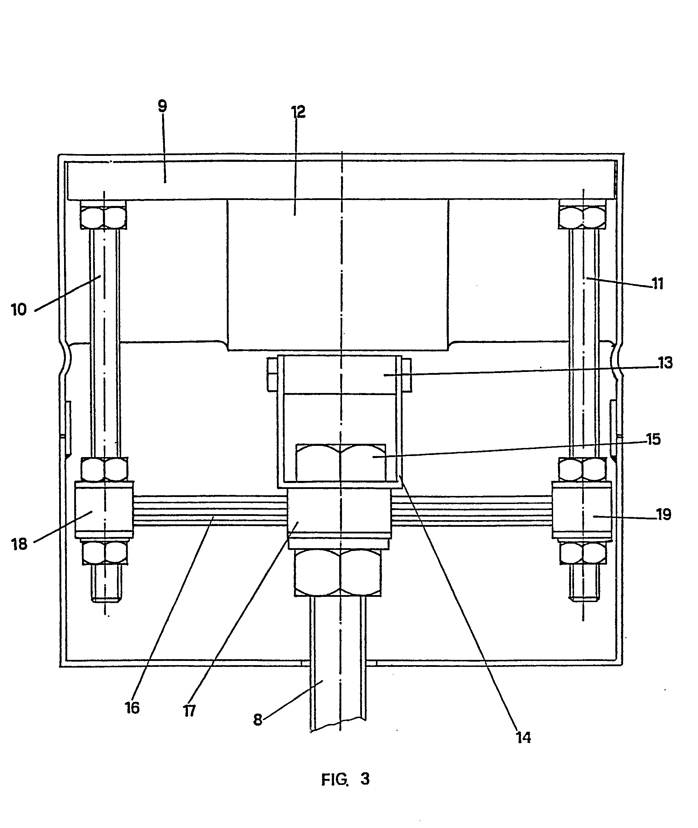

On a représenté en fig. 2 une forme de réalisation d'un terminal monté sur une fiche destinée à être enfoncée dans le sol, et on peut voir que la tête, référencée 3, dudit terminal est rendue solidaire d'un piquet ou fiche à ailettes 7 à l'aide d'un boulon 8 qui permet son démontage aisé en vue des vérifications ou d'un remplacement.

Bien entendu l'on peut prévoir que la tête 3 du terminal soit fixée non plus sur une fiche 7, mais sur un étrier à profil en U susceptible soit d'être solidement scellé dans un mur, soit d'être soudé à un ou plusieurs fers d'une structure en béton armé ou à une poutrelle métallique faisant partie de l'ossature portante d'une construction.

Le terminal 3 comprend une partie externe constituée par une enveloppe cylindrique formée de deux cuvettes emboîtables assemblées l'une à l'autre à l'aide d'un collier approprié convenablement enduit de colle. La cuvette supérieure renferme intérieurement l'ensemble de l'appareillage qui est retenu en place par une masse coulée de résine époxy. On notera que cette cuvette supérieure comporte une zone annulaire rétreinte qui a pour but de s'opposer au glissement intempestif de la masse de résine le long de la paroi sous l'effet des vibrations.

La cuvette inférieure fait fonction de simple couvercle de fermeture et elle est convenablement percée pour le passage du câble d'alimentation électrique 2 et du boulon fileté 8 destiné à la fixation de la tête 3 sur la fiche enfoncée dans le sol ou sur l'êtrier rendu solidaire de la construction.

L'appareillage renfermé par le tête 3 du terminal considéré se divise substantiellement en deux parties dont l'une est fixe tandis que l'autre est mobile. La partie fixe est constituée par une plaque en fer 9 (fig. 3) convenablement perforée pour le passage de deux boulons prisonniers 10 et 11 formés par des tiges filetées fixées à ladite plaque 9 à l'aide d'écrous appropriés.

Un électro-aimant d'actionnement 12, ancré à l'intérieur du bloc de résine époxy, agit sur une masse magnétique 13 reliée par un étrier 14 et un boulon 15 à un ressort 16; celui-ci est avantageusement constitué par un empilage de lames en acier élastique, soudé à une pince centrale 17 portée par le boulon 8 et à des pinces latérales 18 et 19 montées sur les tiges filetées 10 et 11.

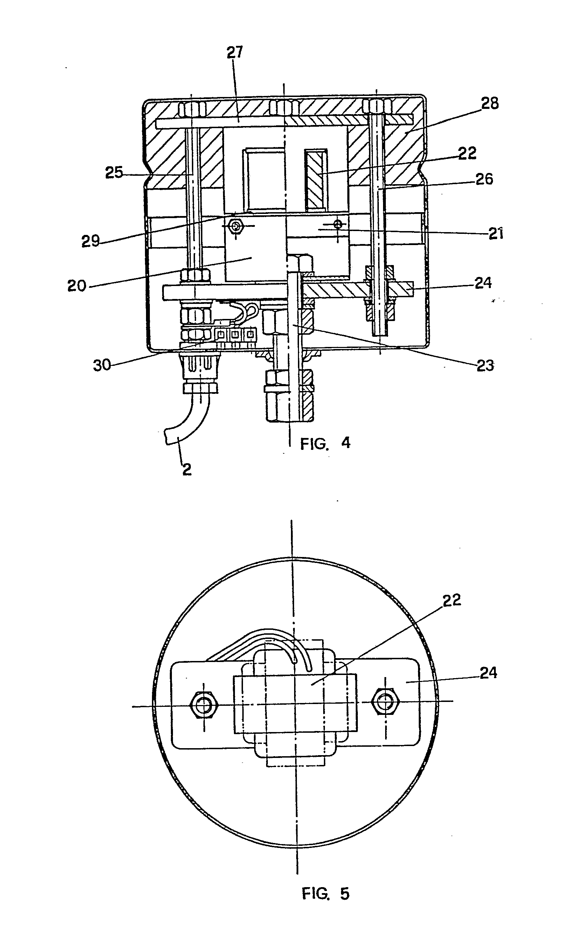

Bien entendu l'on prévoit que la masse magnétique mobile 13 et le paquet de tôles de l'électro-aimant 12 soient disposés transversalement au plan passant par les axes des tiges 10 et 11, comme illustré en fig. 3, ou soient orientés parallèlement audit plan comme on l'a supposé dans la variante correspondant aux fig. 4 et 5.

Dans cette variante de réalisation de chaque terminal, un étrier métallique en U référencé 20 est fixé d'une part aux tôles 21 qui complètent le circuit magnétique de l'électroaimant 22 et d'autre part à un boulon fileté 23 qui traverse une plaquette élastiquement déformable 24, réalisée par exemple en une résine polyamide et fixée aux tiges latérales 25 et 26 prévues en saillie sur la plaque supérieure 27, laquelle est ancrée dans une masse de résine 28.

Un entrefer 29 est ménagé entre les tôles 21 à profil rectangulaire fixées à la plaque 20 et les tôles en forme de peigne montées sur l'électro-aimant 22, de façon à ce que les vibrations soient transmises par les secondes aux premières sans que celles-ci se touchent. Cet entrefer est réglé lors du montage à l'aide d'écrou vissés sur les tiges et 25 et 26.

Le terminal est complété par une boîte à bornes 30 pour le branchement des câbles 2.

On conçoit qu'on peut imaginer d'autres formes de réalisation pour les terminaux. Dans tous les cas on comprend les avantages obtenus par l'adoption du dispositif suivant l'invention. La dératisation est réalisée de manière efficace grâce à des terminaux de construction simple et économique, susceptibles d'être réglés manuellement par modification de l'entrefer en vue de l'obtention par tarage de la puissance vibratoire désirée. La sécurité de fonctionnement et la durée d'usage dans le temps sont garanties, en même temps que la dératisation peut être réalisée aussi bien au niveau de terrains ouverts que de constructions fermées. Les terminaux sont reliés électriquement à une centrale électronique elle-même de construction simplifiée et robuste, laquelle est réglée pour émettre des impulsions électroniques suivant les basses fréquences et les programmes les plus propres à l'obtention d'un effet de dératisation efficace.

**Revendications**

1. Dispositif de dératisation à vibrations pour terrains ou constructions, comprenant une petite centrale électronique (1) agencée pour engendrer une série d'impulsions à fréquence et à des intervalles déterminés en fonction d'un programme établi et reliée par des cables (2) à une série de terminaux (3) fonctionnant par électroaimant et munis chacun d'une fiche (7) destinée à être enfoncée dans le sol ou d'un étrier rendu solidaire d'une structure de construction, caractérisé en ce que:

— la centrale électronique (1) est agencée pour engendrer uniquement des basses fréquences,
— chaque fiche (7) ou étrier d'un terminal est uniquement solidaire d'une pièce élastique plane (16, 24) munie d'une masse magnétique (13) et mise en vibration par un électro-aimant (12, 22) disposé dans le terminal, par fonctionnement électro-magnétique.

2. Dispositif suivant la revendication 1, caractérisé en ce que la pièce élastique plane (16, 24) est reliée à ses deux extrémités par deux tiges filetées (10, 11 ou 25, 26) à une plaque supérieure (9, 27) qui supporte l'électro-aimant (12 ou 22) et l'ensemble tiges filetées avec la plaque élastique, sa masse magnétique et la fiche ou étrier dans le terminal (3).

3. Dispositif suivant la revendication 2, caractérisé en ce que les deux tiges filetées (10, 11 ou 25, 26) sont réglables, de manière à pouvoir faire varier l'entrefer entre la masse magnétique (13) et l'électro-aimant (12, 22).

4. Dispositif suivant la revendication 2 ou 3, caractérisé en ce qu'une plaque supérieure (9 ou 27) supporte l'électro-aimant (12 ou 22) et les tiges filetées (10, 11 ou 25, 26) et est ancrée dans une masse de résine époxy qui retient l'ensemble.

5. Dispositif suivant l'une des revendications précédentes, caractérisé en ce que la centrale (1) comporte pour chacun des câble (2) qui la relient aux terminaux (3) un voyant lumineux (6) qui permet le contrôle continu du bon fonctionnement du terminal correspondant.

6. Dispositif suivant l'une des revendications précédentes, caractérisé en ce que la centrale (1) comprend un commutateur manuel (4') permettant de choisir entre des programmes qui diffèrent quant au décrochage de la fréquence du réseau d'alimentation à courant alternatif et quant à l'alternance de périodes de fonctionnement et de périodes d'arrêt de quelques minutes.

7. Dispositif suivant l'une des revendications précédentes, caractérisé en ce que la pièce élastique est constituée de ressorts à lame.

8. Dispositif suivant l'une des revendications 1 à 6, caractérisé en ce que la pièce élastique est réalisée en résine polyamide ou équivalent.

9. Dispositif suivant l'une des revendications précédentes, caractérisé en ce que la masse magnétique (13) mise en vibration par l'électro-aimant (12, 2) est portée par un étrier (14, 20) fixé sur la pièce élastique plane.

**Patentansprüche**

1. Vorrichtung zur Rattenbekämpfung im Gelände oder in Gebäuden mittels Schwingungen, die eine kleine elektronische Zentraleinheit (1) aufweist, die zur Erzeugung einer Impulsfolge mit einer Frequenz und in vorbestimmten Intervallen in Abhängigkeit von einem erstellten Programm betreibbar ist, und die über Leitungen (2) mit einer Reihe von Anschlüssen (3) verbunden ist, die durch Elektromagneten betrieben sind und die jeweils mit einem in den Boden einlaßbaren Steckpfahl (7) oder einem Bügel versehen sind, der körperlich mit der Konstruktion des Gebäudes verbindbar ist, dadurch gekennzeichnet, daß:

— die elektronische Zentraleinheit (1) zur Erzeugung von Einheitsniederfrequenzen betreibbar ist,

— jeder Steckpfahl (7) oder jede Klammer eines Anschlusses unter Bildung einer körperlichen Einheit mit einem ebenen elastischen Teil (16, 24) verbunden ist, das mit einer magnetischen Masse (13) versehen ist, und durch einen in dem Anschluß angeordneten Elektromagneten (12, 22) durch die elektromagnetische Wechselwirkung in Schwingungen versetzt wird.

2. Vorrichtung nach Anspruch 1, dadurch gekennzeichnet, daß das ebene elastische Teil (16, 24) an seinen beiden Enden über zwei Gewindebolzen (10, 11 oder 25, 26) mit einer oberen Platte (9, 27) verbunden ist, die den Elektromagneten (12 oder 22) und die Anordnung der Schraubenbolzen mit der elastischen Platte, der magnetischen Masse und dem Steckpfahl oder der Klammer in dem Anschluß (3) trägt.

3. Vorrichtung nach Anspruch 2, dadurch gekennzeichnet, daß die beiden Schraubenbolzen (10, 11 oder 25, 26) derart verstellbar sind, daß der Spalt zwischen der magnetischen Masse (13) und dem Elektromagneten (12, 22) geändert werden kann.

4. Vorrichtung nach Anspruch 2 oder 3, dadurch gekennzeichnet, daß die obere Platte (9 oder 27) den Elektromagneten (12 oder 22) und die Schraubenbolzen (10, 11 oder 25, 26) trägt und in eine Epoxyharzmasse eingelassen ist, die die Anordnung hält.

5. Vorrichtung nach einem der vorhergehenden Ansprüche, dadurch gekennzeichnet, daß die Zentraleinheit (1) für jede Leitung (2), die sie mit den Anschlüssen (3) verbindet, ein Leuchtfeld (6) aufweist, das eine ständige Kontrolle der richtigen Arbeitsweise des zugeordneten Anschlusses ermöglicht.

6. Vorrichtung nach einem der vorhergehenden Ansprüche, dadurch gekennzeichnet, daß die Zentraleinheit (1) einen Handschalter (4') aufweist, der eine Wahl zwischen den Programmen gestattet, die sich hinsichtlich der Abkopplung der Frequenz des Wechselstromversorgungsnetzes und der Änderung der Arbeitsperioden und der Stillstandsperioden um einige Minuten unterscheiden.

7. Vorrichtung nach einem der vorhergehenden Ansprüche, dadurch gekennzeichnet, daß das elastische Teil von Blattfedern gebildet wird.

8. Vorrichtung nach einem der Ansprüche 1 bis 6, dadurch gekennzeichnet, daß das elastische Teil aus Polyamidharz oder dergleichen hergestellt ist.

9. Vorrichtung nach einem der vorhergehenden Ansprüche, dadurch gekennzeichnet, daß die durch den Elektromagneten (12, 22) in Schwingung versetzte magnetische Masse (13) von einem Bügel (14, 20) getragen wird, der an dem ebenen elastischen Teil befestigt ist.

**Claims**

1. Device for de-ratting by vibrations for ground or constructions, comprising a small electronic centre (1) arranged to generate a series of impulses at a frequency and at intervals determined in accordance with a predetermined programme and coupled by cables (2) to a series of terminals (3) operating by electro-magnet and each provided with a rod (7) intended to be driven into the ground or with a bracket made fast with a building structure, characterised in that:

— the electronic centre (1) is arranged to generate only low frequencies,

— each rod (7) or bracket of a terminal is fast only with a plane resilient element (16, 24) provided with a magnetic mass (13) and placed in vibration by an electromagnet (12, 22) disposed in the terminal, by electro-magnetic operation.

2. Device according to claim 1, characterised in that the plane resilient element (16, 24) is coupled at its two ends by two threaded rods (10, 11 or 25, 26) to an upper plate (9, 27) which supports the electro-magnet (12 or 22) and the assembly of threaded rods with the resilient plate, its magnetic mass and the rod or bracket in the terminal (3).

3. Device according to claim 2, characterised in that the two threaded rods (10, 11 or 25, 26) are adjustable in such a manner as to permit variation of the gap between the magnetic mass (13) and the electro-magnet (12, 22).

4. Device according to claim 2 or 3, characterised in that an upper plate (9 or 27) supports the electro-magnet (12 or 22) and the threaded rods (10, 11 or 25, 26) and is anchored in a mass of epoxy resin which holds the assembly.

5. Device according to one of the preceding claims characterised in that the centre (1) comprises, for each of the cables (2) which couple it to the terminals (3), a luminous signal (6) which permits the continuous checking of the proper operation of the corresponding terminal.

6. Device according to one of the preceding claims characterised in that the centre (1) comprises a manual switch (4') permitting to choose between the programmes which differ in respect of the changing of the frequency of the alternating current supply system and in respect of the alternation of the periods of operation and periods of rest of several minutes.

7. Device according to one of the preceding claims characterised in that the resilient element is constituted of blade springs.

8. Device according to one of claims 1 to 6 characterised in that the resilient element is made of polyamide resin or the equivalent.

9. Device according to one of the preceding claims characterised in that the magnetic mass (13) placed in vibration by the electro-magnet (12, 2) is carried by a bracket (14, 20) fixed on the plane resilient element.

**0 042 644**

FIG 1

FIG 2

1

FIG. 3

# 0 042 644

FIG. 4

FIG. 5